# EUROPEAN PATENT SPECIFICATION

(11) **EP 3 672 814 B1**
(45) Date of publication and mention of the grant of the patent: **16.03.2022**
(21) Application number: 18923276.2
(22) Date of filing: 30.10.2018
(51) Int. Cl.: B60C 27/14

(54) **A BUILT-IN TRACK RIM MECHANISM**
EINGEBAUTER SPURKRANZMECHANISMUS
MÉCANISME DE JANTE À RAIL INTÉGRÉ

(30) Priority: 03.11.2017 TR 201717197
(43) Date of publication of application: 01.07.2020
(73) Proprietor: Sencer, Abdullah Talip, Büyükçekmece/Istanbul (TR)
(72) Inventor: Sencer, Abdullah Talip, Büyükçekmece/Istanbul (TR)
(86) International application number: PCT/TR2018/000104
(87) International publication number: WO 2019/245483

(56) References cited:
- WO-A1-2004/012949
- WO-A1-2004/012949
- US-A- 3 861 752
- US-A- 3 861 752
- US-A- 5 540 267
- US-A- 5 540 267
- US-A1- 2016 325 583
- US-B1- 6 983 778
- US-B1- 9 487 056

## Description

### Technical Field

The invention relates to a track rim mechanism which prevents the vehicles from skidding on snow, mud, sand and similar grounds by a built-in system winding the tire in the rim part of rubber-wheeled vehicles.

### Background of the Invention

It is known that rubber-wheeled vehicles are the vehicles such as automobiles, trucks, buses commonly used in everyday life. The biggest problem with rubber-wheeled vehicles, especially gone through in the winter months, is the unwanted accidents caused by the loss of control of the vehicle due to the sliding of the tire wheels in the environment such as snow, mud caused by rain, and sand.

It is obligatory for many vehicles to wear winter tires when entering the winter months and there is also the obligation to carry chains each time. However, it is very difficult and requires the ability to install and remove said chains where necessary. As it requires a certain amount of force, putting chains on tires is very troublesome work for women especially.

The snow chains and similar products, which prevent the vehicles from skidding, allow the drivers to mount or dismount under the cold or rainy weather conditions by leaving the vehicles and while the vehicles are immobilized only.

Mounting and dismounting of the chain mechanisms used in the existing systems cause serious loss of time. The breakdown of one of the components in the chain mechanisms causes the system to lose its operability completely. In such a case, users are unable to put on the chains on the tires of their vehicles and stranded on the road.

Blowout of the vehicle tire may result in damage or breakdown of existing chain mechanisms.

Again, the chain mechanisms used in the existing systems occupy additional space such as baggage and requires handling.

The Utility Model No. TR 2016 01077 in the literature, which is relevant to the present subject, discloses a plastic snow chain which enables all passenger cars and motor vehicles (except trucks and buses) to move more comfortably and safely on snowy and icy roads and can be used by more than one person and can be used more than once and which is characterized by comprising clamp, latch, and knurled section.

In said application, a plastic snow chain mechanism is provided for the vehicle tires. Further, Patent Application No. TR 2015 15561 makes the following disclosures: A practical snow chain is designed for rubber vehicles, the outer part of which is fixed ring and the inner part of which is flexible. The flexible tubing is inflated to be slightly larger than the tire diameter with the pump system, allowing the flexible tubing to pass from the top of the tire to the interior of the tire. The air of the flexible tubing is lowered by means of the pump system, and the chain is stretched. After the vehicle is moved forward ½ meter, the practical snow chain is fitted to the tire. In order to remove the practical snow chain, the flexible tubing is inflated and the practical snow chain is pulled out of the tire by pulling it in the outward direction. The flexible tubing air is lowered and the vehicle is separated by a practical snow chain after the vehicle is moved forward ½ meter.

In the said application, a flexible tubing and a snow chain application run by a pump are provided. A further example of a track rim mechanism belonging to the state of the art is disclosed in US paten document US 5 540 267 A.

For the reasons mentioned above, a new track rim mechanism is needed for rubber-wheeled vehicles.

### Description of the Invention

Moving forward from the state of the art, the objective of the invention is to provide a new track rim mechanism which eliminates the existing disadvantages.

A further objective of the invention is to provide a structure which the driver of the vehicle can put to work by using mechanical, electronic, hydraulic and pneumatic automation systems without getting out of the vehicle and while the vehicle is on the move.

A further objective of the invention is to provide a structure that can be manually activated.

A further objective of the invention is to provide a structure that continues to wind the tire while the vehicle is in the braked state.

A further objective of the invention is to provide a structure in which the opening and closing process can be carried out very quickly.

A further objective of the invention is to provide a structure which can continue to still work in the case of breakdown as it has not a single drive mechanism and has many track mechanisms.

A further objective of the invention is to provide a structure which does not damage the system or the vehicle if the tire is blown out.

A further objective of the invention is to provide a structure which
does not occupy additional space and does not require additional handling for installation since it is built-in and manufactured fitting the rim.The invention solves the mentioned problems by means of a track rim mechanism according to claim 1.

### Description of the Drawings

Figure 1 - Front view of the track rim mechanism according to the invention.
Figure 2 - Rear view of the track rim mechanism according to the invention.
Figure 3 - Top and bottom view of the track rim mechanism according to the invention.
Figure 4 - Detailed view of the automatic drive mechanism of the track rim mechanism according to the invention.
Figure 5 - Closed view of the track rim mechanism according to the invention.
Figure 6 - Cross-sectional disintegrated views of the track rim mechanism according to the invention.
Figure 7 - View of the tension wire of the track rim mechanism according to the invention.
Figure 8 - The view of the chain link conical part of the track rim mechanism according to the invention.
Figure 9 - The view of the chain link oval part of the track rim mechanism according to the invention.

### Reference Numbers

- 1.: Vehicle tire
- 2.: Rim
- 3.: Track Mechanism
- 4.: Manual Control Chamber
- 5.: Chain Track
- 6.: Automatic Drive Mechanism
- 7.: Bearing housing
- 8.: Chain Link
- 9.: Steering Shaft
- 10.: Spring
- 11.: Gear Box
- 12.: Motion Shaft
- 13.: Chain Sprocket
- 14.: Wire Reel
- 15.: Chain Bearings
- 16.: Chain Bearing Plates
- 17.: Chain-directing Adjustment Chamber
- 18.: Tension Wire Holes
- 19.: Tension Wire

### Detailed Description of the Invention

In this detailed description, the novelty disclosed by the invention is explained by examples for a better understanding of the subject without any limiting effect.

The invention relates to a built-in track rim mechanism which is located on the rim (2) to prevent the rubber-wheeled vehicles (1) from skidding on snow, mud, sand and similar grounds and is characterized in that it comprises a chain track (5) which winds vehicle tire (1) and prevents it from skidding, track mechanism (3) positioned as a component which guides said chain track (5), automatic drive mechanism (6) for sending switching-on and switching-off command to said track mechanism (3), bearing housing (7) which houses the threaded pin of said track mechanism (3), chain link (8) which forms the whole of said chain track (5) when combined and which is positioned as each part of the chain track (5), tension wire (19) which ensures the integrity of the chain track (5) passing through all the chain links (8) and which is positioned in a tensioned manner, and wire reel (14) which enables the tension wire (19) to remain as being wound with the effect of the spring (10) located at its ends.

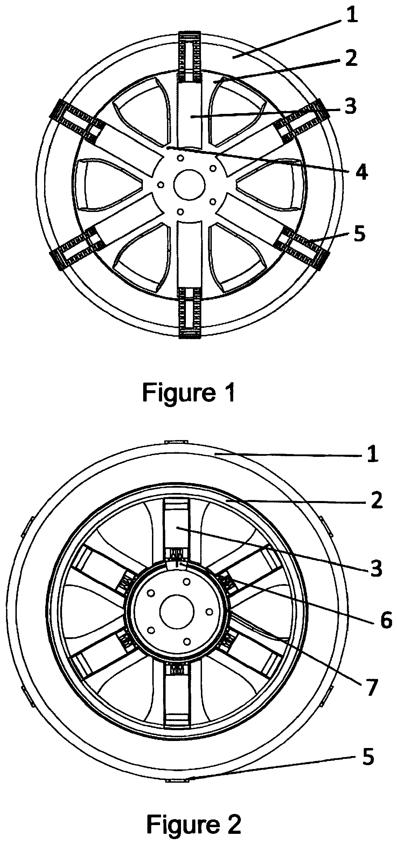

Figure 1 shows the front view of the track rim mechanism according to the invention.

Figure 2 shows the rear view of the track rim mechanism according to the invention

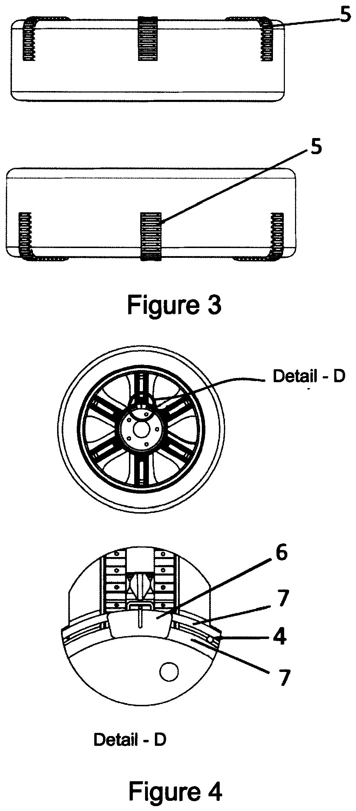

Figure 3 shows the top and bottom view of the track rim mechanism according to the invention.

Figure 4 shows a detailed view of the automatic drive mechanism (6) of the track rim mechanism according to the invention.

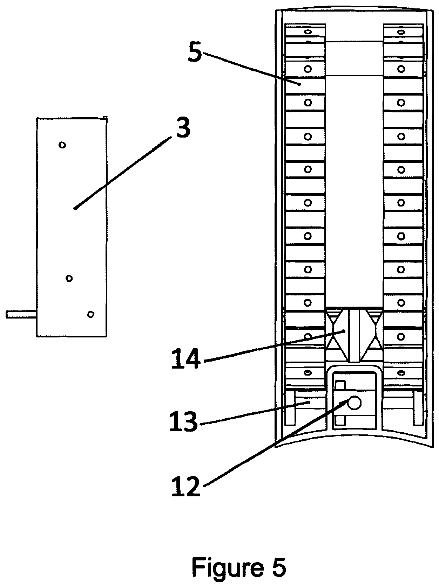

Figure 5 shows the closed view of the track rim mechanism according to the invention.

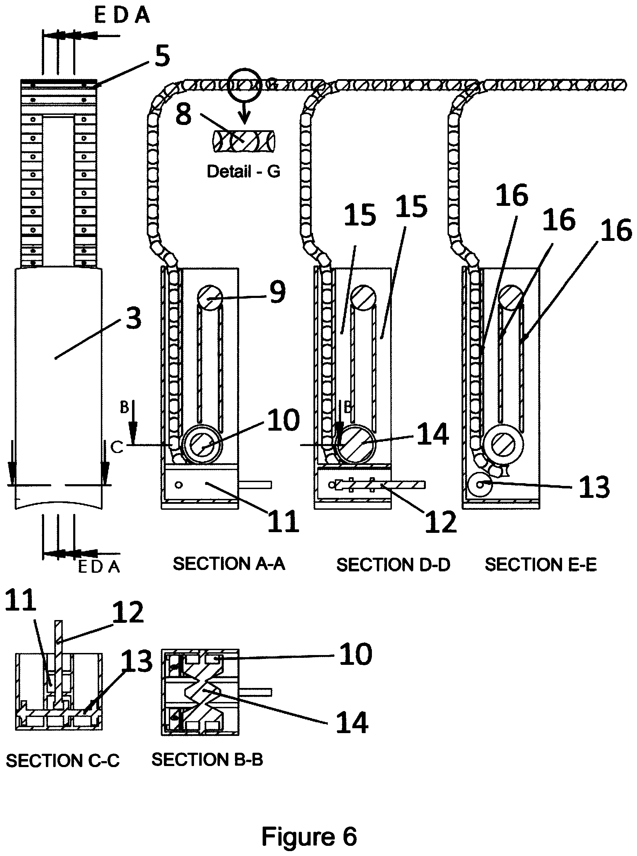

Figure 6 shows the cross-sectional opened views of the track rim mechanism according to the invention.

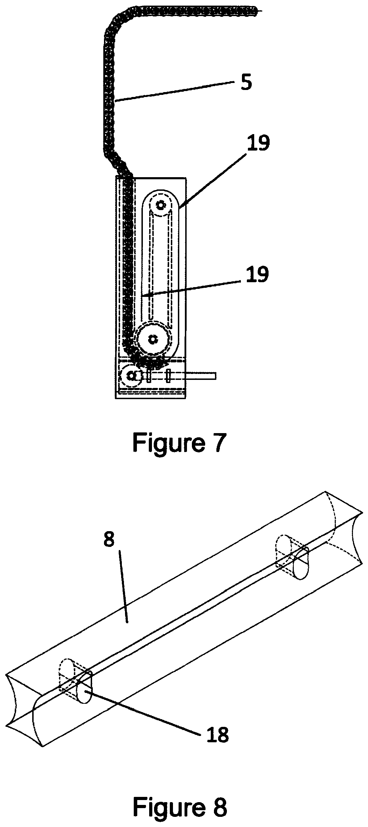

Figure 7 shows the view of the tension wire (19) of the track rim mechanism according to the invention.

Figure 8 shows the view of the conical part of the chain link (8) of the track rim mechanism according to the invention.

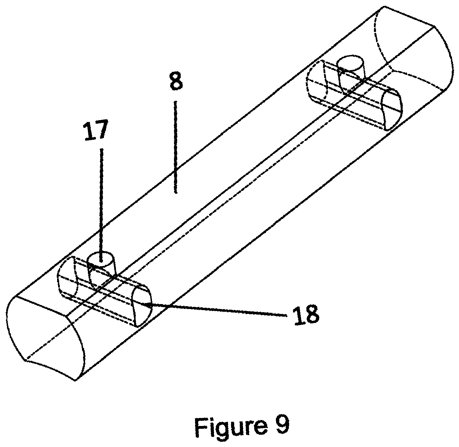

Figure 9 shows the view of the oval part of the chain link (8) of the track rim mechanism according to the invention.

Track rim mechanism according to the invention comprises the main parts of vehicle tire (1) and rim (2) which form the vehicle wheel, track mechanism (3) which is positioned as component which guides the chain track (5), the manual control chamber (4) which is positioned as the point of intervention where the mechanism is manually controlled by a screwdriver-like tool, if necessary, chain track (5) which winds vehicle tire (1) and prevents it from skidding, automatic drive mechanism (6) for sending switching-on and switching-off command to said track mechanism (3), bearing housing (7) which houses the threaded pin of said track mechanism (3), chain link (8) which forms the whole of the said chain track (5) when combined and which is positioned as each part of the chain track (5), the steering shaft (9) which reduces the friction, leading the flow of the chain track (5) within the mechanism, tension wire (19) which ensures the integrity of the chain track (5) passing through all the chain links (8) and which is positioned in a tensioned manner, the spring (10) which is located at the ends of the wire reel (14) on which said tension wire (19) is wound, and which thereby ensures that the tension wire (19) is kept as being tensioned; chain sprocket (13) guiding said chain track (5) with its teeth, the motion shaft (12) which takes the movement from the bearing housings (7) and conveys the movement to the sprocket (13), a gear box (11) which contain the parts transferring the movement of said motion shaft (12) to the chain sprocket (13) and which is positioned as a box, wire reel (14) which enables the tension wires (19) disposed across said chain track (5) to remain wound with the effect of the spring (10) located at its ends, chain bearings (15) positioned as gaps in which the chain track (5) moves within said track mechanism (3), chain bearing plates (16) providing the resistance between said chain bearings (15) and within the mechanism, chain-directing adjustment chamber (17) which guides the chain track (5) in the oval chain link (8), within which contains screw, and which is positioned as the adjusting eyes, tension wire holes (18) positioned as holes in which said tension wire (19) passes through chain link (8) in double sides.

The driver of the vehicle moving on the slippery ground controls the automatic drive mechanism (6) by pressing the button on the driver's console. The automatic drive mechanism (6), which is fixed to the vehicle body separately from said rim (2), fixes the lower ring of the bearing housing (7) and does not allow it to rotate. Said fixing operation allows the track mechanism (3) to rotate the motion shaft (12) in a clockwise direction. The upper ring of the bearing housing (7) is not interfered with and is allowed to rotate freely subject to the drive shaft (12).

The clockwise rotating motion shaft (12) drives the chain sprocket (13) and the chain sprocket (13) runs the chain track (5) so as to remove out of the track mechanism (3). The chain track (5) moves outwardly in contact with the steering shaft (9), the wire reel (14) and the chain sprocket (13) and rotates the wire reel (14) thereon in a controlled manner.

The tension wires (19) located along the said chain track (5) is wound on the wire reel (14) by the effect of the spring (10) located at its ends.

There is thread at the contact points where the wire reel (14) touch the chain track (5) and the chain track (5) rotates by this motion.

The chain track (5) exits from the chamber to wind the vehicle tire (1) and rotates in the spring (10), the chain track (5) extends outward since the diameter of the wire winding line is smaller than the diameter of the thread line, the tension wire (19) moves outwardly in a controlled manner and its tension increases. The chain track (5) moving in this way winds the tire coming into the form which has previously been shaped using chain-directing adjustment chambers (17).

The first and last chain links (8) are the links rotatable in their own axis. While the first of said chain links (8) proceeds, the last chain link (8), which prevents the seizures, passes over the chain sprocket (13) and stops the advancement by rotating on its axis.

Said chain track (5) is a whole of the parts, which is consisted of oval and conical chain links (8), which keeps its integrity by means of the tensioned tension wire (19) passing through tension wire holes (18) in the chain links (8), which uses the tension on the tension wire (19) by means of the chain-directing adjustment chamber (17) on the oval chain link (8) in order to take form.

## Claims

1. A built-in track rim mechanism which is located on the rim (2) to prevent the rubber-wheeled vehicles (1) from skidding on snow, mud, sand and similar grounds, **characterized in that** it comprises chain track (5) which winds vehicle tire (1) and prevents it from skidding, track mechanism (3) positioned as a component which guides said chain track (5), automatic drive mechanism (6) for sending switching-on and switching-off command to said track mechanism (3), bearing housing (7) which houses the threaded pin of said track mechanism (3), chain link (8) which forms the whole of said chain track (5) when combined and which is positioned as each part of the chain track (5), **characterised by** a tension wire (19) which ensures the integrity of the chain track (5) passing
through all the chain links (8) and which is positioned in a tensioned manner, and wire reel (14) which enables the tension wire (19) to remain as being wound with the effect of the spring (10) located at its ends.

2. A track rim mechanism according to claim 1, **characterized in that** it comprises steering shaft (9) which leads the flow of the chain track (5) within the mechanism and reduces the friction.

3. A track rim mechanism according to any one of the preceding claims, **characterized in that** it comprises chain sprocket (13) guiding said chain track (5) with its teeth.

4. A track rim mechanism according to any one of the preceding claims, **characterized in that** it comprises motion shaft (12) which takes the movement from the bearing housings (7) and conveys the movement to the chain sprocket (13).

5. A track rim mechanism according to any one of the preceding claims, **characterized in that** it comprises gearbox (11) which contains the parts transferring the movement of said motion shaft (12) to the chain sprocket (13) and which is positioned as a box.

6. A track rim mechanism according to any one of the preceding claims, **characterized in that** it comprises chain bearings (15) positioned as gaps in which the chain track (5) moves within said track mechanism (3).

7. A track rim mechanism according to any one of the preceding claims, **characterized in that** it comprises chain bearing plates (16) providing the resistance between said chain bearings (15) and within the mechanism.

8. A track rim mechanism according to any one of the preceding claims, **characterized in that** it comprises chain-directing adjustment chamber (17) which guides the chain track (5) in the oval chain link (8), within which contains screw, and which is positioned as the adjusting eyes.

9. A track rim mechanism according to any one of the preceding claims, **characterized in that** it comprises tension wire holes (18) positioned as holes in which said tension wire (19) passes through chain link (8) in double sides.

## Patentansprüche

1. Ein eingebauter Kettenkranzmechanismus, der sich auf der Felge (2) befindet, um zu verhindern, dass die gummibereiften Fahrzeuge (1) auf Schnee, Schlamm, Sand und ähnlichen Untergründen ins Schleudern geraten, **dadurch gekennzeichnet, dass** es eine Kettenbahn (5) umfasst, die den Fahrzeugreifen (1) aufwickelt und ihn am Schleudern hindert, einen Kettenmechanismus (3), der als eine Komponente angeordnet ist, die die Kettenbahn (5) führt, einen automatischen Antriebsmechanismus (6) zum Senden eines Einschalt- und Ausschaltbefehls an den Kettenmechanismus (3), ein Lagergehäuse (7), das den Gewindestift des Kettenmechanismus (3) aufnimmt, Kettenglied (8), das die Gesamtheit der Kettenbahn (5) bildet, wenn sie kombiniert ist, und das als jeder Teil der Kettenbahn (5) angeordnet ist,
**gekennzeichnet durch** einen Spanndraht (19), der die Integrität der Kettenbahn (5) sicherstellt, die durch alle Kettenglieder (8) verläuft, und der in einer gespannten Weise angeordnet ist, und eine Drahtspule (14), die es dem Spanndraht (19) ermöglicht, unter der Wirkung der an seinen Enden angeordneten Feder (10) gewickelt zu bleiben.

2. Kettenkranzmechanismus nach Anspruch 1, **dadurch gekennzeichnet, dass** es eine Lenkwelle (9) umfasst, die den Fluss der Kettenbahn (5) innerhalb des Mechanismus führt und die Reibung verringert.

3. Kettenkranzmechanismus nach einem der vorhergehenden Ansprüche, **dadurch gekennzeichnet, dass** es ein die genannte Kettenbahn (5) mit ihren Zähnen führendes Kettenrad (13) umfasst.

4. Kettenkranzmechanismus nach einem der vorhergehenden Ansprüche, **dadurch gekennzeichnet, dass** es eine Bewegungswelle (12) umfasst, die die Bewegung von den Lagergehäusen (7) aufnimmt und auf das Kettenrad (13) überträgt.

5. Kettenkranzmechanismus nach einem der vorhergehenden Ansprüche, **dadurch gekennzeichnet, dass** es ein als Kasten angeordnetes Getriebe (11) umfasst, welches die Teile enthält, die die Bewegung der Bewegungswelle (12) auf das Kettenrad (13) übertragen.

6. Kettenkranzmechanismus nach einem der vorhergehenden Ansprüche, **dadurch gekennzeichnet, dass** es als Spalte angeordnetes Kettenlager (15) umfasst, in denen sich die Kettenbahn (5) innerhalb des genannten Kettenmechanismus (3) bewegt.

7. Kettenkranzmechanismus nach einem der vorhergehenden Ansprüche, **dadurch gekennzeichnet, dass** es Kettenlagerplatten (16) umfasst, die den Widerstand zwischen den Kettenlagern (15) und innerhalb des Mechanismus vorsehen.

8. Kettenkranzmechanismus nach einem der vorhergehenden Ansprüche, **dadurch gekennzeichnet, dass** es eine kettenführende Einstellkammer (17) umfasst, die die Kettenbahn (5) in dem ovalen Kettenglied (8) führt, in dem sich eine Schraube befindet, und die als Einstellösen angeordnet ist.

9. Kettenkranzmechanismus nach einem der vorhergehenden Ansprüche, **dadurch gekennzeichnet, dass** es als Löcher angeordnete Spanndrahtlöcher (18) umfasst, in denen der genannte Spanndraht (19) durch das Kettenglied (8) in Doppelseiten verläuft.

## Revendications

1. Mécanisme intégré de la jante de chenille qui est situé sur la jante (2) pour empêcher les véhicules à roues en caoutchouc (1) de déraper sur la neige, la boue, le sable et les sols similaires, **caractérisé en ce qu'**il comprend une chenille de chaîne (5) qui enroule le pneu du véhicule (1) et empêche son dérapage, un mécanisme de chenille (3) positionné comme un composant qui guide ladite chenille de chaîne (5), un mécanisme d'entraînement automatique (6) pour envoyer une commande de mise en marche et d'arrêt audit mécanisme de chenille (3), un logement de palier (7) qui loge l'axe fileté dudit mécanisme de chenille (3), un maillon de chaîne (8) qui forme la totalité de ladite chenille de chaîne (5) lorsqu'il est combiné et qui est positionné comme chaque partie de la chenille de chaîne (5),
**caractérisé par** un fil de tension (19) qui assure l'intégrité du chenille de chaîne (5) passant par tous les maillons de chaîne (8) et qui est positionné de manière tendue, et une bobine de fil (14) qui permet au fil de tension (19) de rester enroulé sous l'effet du ressort (10) situé à ses extrémités.

2. Mécanisme de la jante de chenille selon la revendication 1, **caractérisé en ce qu'**il comprend un arbre de direction (9) qui dirige le flux de la chenille de chaîne (5) à l'intérieur du mécanisme et réduit la friction.

3. Mécanisme de la jante de chenille selon l'une quelconque des revendications précédentes, **caractérisé en ce qu'**il comprend un pignon de chaîne (13) guidant ladite chenille de chaîne (5) avec ses dents.

4. Mécanisme de la jante de chenille selon l'une quelconque des revendications précédentes, **caractérisé en ce qu'**il comprend un arbre de mouvement (12) qui reçoit le mouvement des logements de paliers (7) et transmet le mouvement au pignon de chaîne (13).

5. Mécanisme de la jante de chenille selon l'une quelconque des revendications précédentes, **caractérisé en ce qu'**il comprend une boîte de vitesses (11) qui contient les parties transférant le mouvement dudit arbre de mouvement (12) au pignon de chaîne (13) et qui est positionnée comme une boîte.

6. Mécanisme de la jante de chenille selon l'une quelconque des revendications précédentes, **caractérisé en ce qu'**il comprend des paliers de chaîne (15) positionnés comme des espaces dans lesquels la chenille de chaîne (5) se déplace à l'intérieur dudit mécanisme de chenille (3).

7. Mécanisme de la jante de chenille selon l'une quelconque des revendications précédentes, **caractérisé en ce qu'**il comprend des plaques de palier de chaîne (16) fournissant la résistance entre lesdits paliers de chaîne (15) et à l'intérieur du mécanisme.

8. Mécanisme de la jante de chenille selon l'une quelconque des revendications précédentes, **caractérisé en ce qu'**il comprend une chambre de réglage de la direction de la chaîne (17) qui guide la chenille de la chaîne (5) dans le maillon ovale de la chaîne (8), à l'intérieur de laquelle est contenue une vis, et qui est positionnée comme les œillets de réglage.

9. Mécanisme de la jante de chenille selon l'une quelconque des revendications précédentes, **caractérisé en ce qu'**il comprend des trous de fil de tension (18) positionnés comme des trous dans lesquels ledit fil de tension (19) passe à travers le maillon de chaîne (8) sur deux côtés.
